# EUROPÄISCHE PATENTSCHRIFT

(11) **EP 2 852 748 B1**
(45) Veröffentlichungstag und Bekanntmachung des Hinweises auf die Patenterteilung: **27.02.2019**
(21) Anmeldenummer: 13718583.1
(22) Anmeldetag: 24.04.2013
(51) Int. Cl.: F02D 41/20, F02D 41/24

(54) **VERFAHREN ZUM BETREIBEN EINES KRAFTSTOFFSYSTEMS FÜR EINE BRENNKRAFTMASCHINE**
METHOD FOR OPERATING A FUEL SYSTEM FOR AN INTERNAL COMBUSTION ENGINE
PROCÉDÉ DE FONCTIONNEMENT D'UN SYSTÈME DE CARBURANT DE MOTEUR À COMBUSTION INTERNE

(30) Priorität: 23.05.2012 DE 102012208614
(43) Veröffentlichungstag der Anmeldung: 01.04.2015
(73) Patentinhaber: Robert Bosch GmbH, 70442 Stuttgart (DE)
(72) Erfinder: RICHTER, Uwe, 71706 Markgroeningen (DE); WILMS, Rainer, 71706 Markgroeningen (DE); KUEMPEL, Joerg, 71640 Ludwigsburg (DE); MAESS, Matthias, 71034 Boeblingen (DE)
(86) Internationale Anmeldenummer: PCT/EP2013/058506
(87) Internationale Veröffentlichungsnummer: WO 2013/174604

(56) Entgegenhaltungen:
- WO-A1-2006/029931
- DE-A1- 10 305 523
- DE-A1- 19 945 618
- DE-A1-102006 027 823
- DE-A1-102007 035 316
- DE-A1-102010 021 168
- DE-A1-102010 043 914

## Beschreibung

### Stand der Technik

Die Erfindung betrifft ein Verfahren nach dem Oberbegriff des Anspruchs 1, sowie eine Steuer- und/oder Regeleinrichtung und ein Computerprogramm nach den nebengeordneten Patentansprüchen.

Mengensteuerventile, beispielsweise in einem Kraftstoffsystem einer Brennkraftmaschine, sind vom Markt her bekannt. Mengensteuerventile werden im Allgemeinen elektromagnetisch als Schaltventile mit zwei Schaltstellungen betrieben und sind häufig ein integraler Bestandteil einer Hochdruckpumpe des Kraftstoffsystems. Das Mengensteuerventil steuert die zu einem Hochdruckspeicher ("Rail") gepumpte Kraftstoffmenge, von wo aus Kraftstoff zu den Einspritzventilen der Brennkraftmaschine geleitet wird. Ein mit einem Ventilelement des Mengensteuerventils gekoppelter Anker kann durch Magnetkraft bewegt werden. Das Ventilelement - meist eines Einlassventils der Hochdruckpumpe - kann gegen einen Ventilsitz anschlagen, beziehungsweise von dem Ventilsitz abgehoben werden. Dadurch kann eine geförderte Kraftstoffmenge der Brennkraftmaschine und so letztlich der Druck im Rail geregelt werden. Eine Patentveröffentlichung aus diesem Fachgebiet ist beispielsweise die DE 10 2007 035 316 A1.

### Offenbarung der Erfindung

Das der Erfindung zugrunde liegende Problem wird durch ein Verfahren nach Anspruch 1, sowie durch eine Steuer- und/oder Regeleinrichtung und ein Computerprogramm nach den nebengeordneten Ansprüchen gelöst. Vorteilhafte Weiterbildungen sind in Unteransprüchen angegeben. Für die Erfindung wichtige Merkmale finden sich ferner in der nachfolgenden Beschreibung und in den Zeichnungen, wobei die Merkmale sowohl in Alleinstellung als auch in unterschiedlichen Kombinationen für die Erfindung wichtig sein können, ohne dass hierauf nochmals explizit hingewiesen wird.

Die Erfindung weist den Vorteil auf, dass eine Bestromung einer elektrischen Betätigungseinrichtung für eine Zumesseinrichtung eines Kraftstoffsystems für eine Brennkraftmaschine vermindert werden kann (so genannte "stromreduzierte Ansteuerung"). Dadurch kann eine Geschwindigkeit bewegter Elemente der Zumesseinrichtung sowie ein Betriebsgeräusch der Zumesseinrichtung insbesondere in einem Bereich niedriger Drehzahlen der Brennkraftmaschine vermindert werden. Dabei ermöglicht es das erfindungsgemäße Verfahren, die Bestromung in Abhängigkeit von einem jeweiligen Exemplar der Zumesseinrichtung zu vermindern. Dabei kann - im Wesentlichen unabhängig von Exemplarstreuungen, von Temperaturen oder von einem ohmschen Widerstand von Zuleitungen der elektrischen Betätigungseinrichtung - dennoch ein sicheres Schalten der Zumesseinrichtung erreicht werden.

Die Erfindung betrifft ein Verfahren zum Betreiben eines Kraftstoffsystems für eine Brennkraftmaschine, wobei die Zumesseinrichtung zur Bemessung einer Fördermenge des Kraftstoffs mittels der elektrischen Betätigungseinrichtung geöffnet und/oder geschlossen werden kann, und wobei ein Ventilelement der Zumesseinrichtung bei nicht angesteuerter Betätigungseinrichtung in eine erste Position und bei angesteuerter Betätigungseinrichtung in eine zweite Position schalten kann. Dabei entspricht die erste Position einer geschlossenen Zumesseinrichtung und die zweite Position einer geöffneten Zumesseinrichtung. Das Verfahren ist in einer ersten Alternative durch die folgenden Schritte gekennzeichnet:
(a) Ansteuern der elektrischen Betätigungseinrichtung in mindestens einem ersten Zyklus derart, dass das Ventilelement sicher in die zweite Position schaltet;
(b) Ansteuern der elektrischen Betätigungseinrichtung in mindestens einem zweiten Zyklus derart, dass die elektrische Betätigungseinrichtung von Ansteuerung zu Ansteuerung mit schrittweise fallender Ansteuerenergie angesteuert wird, bis ein Grenzfall erreicht ist, bei dem das Ventilelement gerade noch bzw. gerade nicht mehr in die zweite Position schaltet;
(c) Ermitteln einer ersten Ansteuerenergie, welche dem Grenzfall entspricht;
(d) Nachfolgendes Ansteuern der Betätigungseinrichtung unter Berücksichtigung der ersten Ansteuerenergie.
Damit wird - ausgehend von einer zum sicheren Schalten in die zweite Position genügenden Ansteuerung der elektrischen Betätigungseinrichtung - die Ansteuerenergie schrittweise vermindert, und es wird sozusagen von "oben" an den Grenzfall "herangetastet". Dabei wird zugleich die zu dem Grenzfall gehörende erste Ansteuerenergie ermittelt, welche nachfolgend als Bezugswert zur Ansteuerung der elektrischen Betätigungseinrichtung verwendet wird. Die erste Ansteuerenergie ist also als Grenzfall mindestens erforderlich, um die elektrische Betätigungseinrichtung sicher zu schalten. Die elektrische Betätigungseinrichtung ist vorzugsweise als elektromagnetische Betätigungseinrichtung ausgeführt und umfasst dabei eine Spule und einen mittels magnetischer Kraft bewegbaren Anker. Alternativ ist es denkbar, das erfindungsgemäße Verfahren auch bei einer einen Piezo-Aktor umfassenden elektrischen Betätigungseinrichtung durchzuführen. Die Zumesseinrichtung entspricht einem so genannten "Mengensteuerventil", welches beispielsweise ein stromaufwärts einer Kraftstoffpumpe des Kraftstoffsystems angeordnetes Einlassventil umfasst.

Eine zweite nicht erfindungsgemäße Alternative zur Ermittlung des Grenzfalls ist durch die folgenden Schritte gekennzeichnet:
(a) Ansteuern der elektrischen Betätigungseinrichtung in mindestens einem ersten Zyklus derart, dass das Ventilelement sicher nicht in die zweite Position schaltet;
(b) Ansteuern der elektrischen Betätigungseinrichtung in mindestens einem zweiten Zyklus derart, dass die elektrische Betätigungseinrichtung von Ansteuerung zu Ansteuerung mit schrittweise steigender Ansteuerenergie angesteuert wird, bis der Grenzfall erreicht ist, bei dem das Ventilelement gerade noch bzw. gerade nicht mehr in die zweite Position schaltet;
(c) Ermitteln der ersten Ansteuerenergie, welche dem Grenzfall entspricht;
(d) Nachfolgendes Ansteuern der Betätigungseinrichtung unter Berücksichtigung der ersten Ansteuerenergie.

Die zweite nicht erfindungsgemäße Alternative des Verfahrens wird sinngemäß also umgekehrt wie die erste Alternative durchgeführt. Dabei wird die Ansteuerenergie schrittweise erhöht, und es wird sozusagen von "unten" an den Grenzfall "herangetastet". Beide beschriebenen Alternativen führen zu demselben Grenzfall und zu derselben ersten Ansteuerenergie. Es versteht sich, dass in beiden Alternativen in einem Bereich um den vermuteten Grenzfall die Ansteuerenergie auch schrittweise abwechselnd erhöht und vermindert werden kann, um den Grenzfall genau "auszuloten". Ebenfalls versteht es sich, dass in den Schritten (b) die Ansteuerenergie nicht zwingend mit jeder folgenden Ansteuerung streng monoton verändert werden muss. Es ist also durchaus möglich, für mehrere aufeinander folgende Ansteuerungen eine gleiche Ansteuerenergie zu verwenden.
Vorliegend wird allgemein unter "Ansteuerenergie" ein Zeitverlauf eines die elektrische Betätigungseinrichtung durchfließenden Stroms verstanden. Ein Schaltverhalten der elektrischen Betätigungseinrichtung hängt also von dem Zeitverlauf des Stroms ("Stromprofil") entsprechend einem zugehörigen Zeitintegral ab. Das Zeitintegral des Stroms weist - multipliziert mit einer Spannung - die Dimension einer Energie auf.
In einer Ausgestaltung des Verfahrens wird nach dem Schritt (c) die erste Ansteuerenergie um einen Offsetwert auf eine zweite Ansteuerenergie erhöht, wobei der Offsetwert derart bemessen ist, dass das Ventilelement robust in die zweite Position schalten kann. Entsprechend erfolgt die nachfolgende Ansteuerung im Schritt (d) mit der zweiten Ansteuerenergie. Dadurch kann die Sicherheit des Schaltens entsprechend dem Offsetwert optional verbessert werden, indem es robuster gegenüber Störungen wird, wie beispielsweise Temperaturänderungen und/oder Spannungsänderungen.

Im erfindungsgemäßen Verfahren entspricht die erste Position einer geschlossenen Zumesseinrichtung und die zweite Position einer geöffneten Zumesseinrichtung. Dadurch wird ermöglicht, dass die Zumesseinrichtung im stromlosen Zustand von das Kraftstoffsystem steuernden Einrichtungen geschlossen ist und Kraftstoff nicht unkontrolliert fließen kann. Dadurch kann das Kraftstoffsystem in einem definierten Zustand gehalten werden.
In einer ersten erfindungsgemäßen Möglichkeit zur Ermittlung des Grenzfalls wird ein Druck und/oder eine Druckänderung und/oder eine Druckänderungsgeschwindigkeit in einem Druckspeicher - insbesondere in einem Hochdruckspeicher ("Rail") - des Kraftstoffsystems ermittelt und mit einem Schwellwert verglichen. Der Grenzfall kann beispielsweise durch einen Anstieg in einem Zeitverlauf des Raildrucks erkannt werden. Dazu können entsprechende Schwellwerte vorgegeben sein. Somit kann beispielsweise ermittelt werden, ob ein bestimmter Kraftstoffdruck überschritten ist und/oder ob ausgehend von einem Anfangswert des Kraftstoffdrucks eine Druckänderung einen vorgegebenen Schwellwert überschritten hat und/oder ob die Druckänderungsgeschwindigkeit einen vorgegebenen Schwellwert überschritten hat. Dadurch kann die Ermittlung des Grenzfalls besonders präzise erfolgen.

In einer zweiten nicht erfindungsgemäßen Möglichkeit zur Ermittlung des Grenzfalls wird eine Spannung und/oder ein Strom der elektrischen Betätigungseinrichtung ermittelt und ausgewertet. Vergleichsweise schnelle Änderungen der Bewegung des Ventilelements führen zu einer entsprechenden Änderung der Bewegung des Ankers und daraus folgend zu einer entsprechenden Änderung eines den Anker umgebenden Magnetfelds. Nach dem Induktionsgesetz wird dadurch in einer Spule der elektromagnetischen Betätigungseinrichtung eine Spannung erzeugt, die an Anschlüssen der elektromagnetischen Betätigungseinrichtung ermittelbar ist.
Weiterhin kann vorgesehen sein, dass die zweite Ansteuerenergie und/oder ein der zweiten Ansteuerenergie entsprechender Zeitverlauf der Ansteuerung bzw. Zeitverlauf des Stroms in einem Datenspeicher - beispielsweise unter Verwendung eines Kennfelds - abgespeichert wird. Dadurch kann für das nachfolgende Ansteuern der elektromagnetischen Betätigungseinrichtung der abgespeicherte Wert aus dem Datenspeicher ausgelesen werden und braucht daher nur gelegentlich oder periodisch im Betrieb der Zumesseinrichtung ermittelt zu werden. Dadurch kann die Verfügbarkeit des abgespeicherten Endzustands erhöht werden, indem die Adaptionsvorgänge entfallen. Ergänzend kann vorgesehen sein, auch weitere Größen oder Parameter, wie zum Beispiel eine Drehzahl der Brennkraftmaschine, zusammen mit der Ansteuerenergie bzw. dem Zeitverlauf des Stroms abzuspeichern.

Eine erste Alternative der Ansteuerung des elektromagnetischen Betätigungseinrichtung sieht vor, dass ein Zeitverlauf der Ansteuerung eine erste Phase mit einem monoton steigenden Stromverlauf umfasst, und dass der Zeitverlauf eine nachfolgende zweite Phase umfasst, in welcher die elektrische Betätigungseinrichtung mittels einer Pulsweitenmodulation angesteuert wird, und dass eine Dauer der ersten Phase und/oder ein Tastverhältnis der Pulsweitenmodulation innerhalb der zweiten Phase verändert wird, um den Grenzfall zu ermitteln. Damit wird ein erstes zeitliches "Stromprofil" beschrieben, welches zur Durchführung des Verfahrens besonders geeignet ist.

Eine zweite Alternative der Ansteuerung des elektromagnetischen Betätigungseinrichtung sieht vor, dass der Zeitverlauf der Ansteuerung eine erste Phase mit einem monoton steigenden Stromverlauf umfasst, und dass der Zeitverlauf eine nachfolgende zweite Phase umfasst, in welcher die elektrische Betätigungseinrichtung mittels eines regelbaren Stroms bestromt wird, und dass eine Dauer der ersten Phase und/oder eine Stärke des regelbaren Stroms innerhalb der zweiten Phase verändert wird, um den Grenzfall zu ermitteln. Damit wird ein zweites zeitliches "Stromprofil" beschrieben, welches zur Durchführung des Verfahrens besonders geeignet ist.

Eine dritte Alternative der Ansteuerung des elektromagnetischen Betätigungseinrichtung sieht vor, dass der Zeitverlauf der Ansteuerung eine erste Phase umfasst, in welcher die elektrische Betätigungseinrichtung mittels eines ersten regelbaren Stroms bestromt wird, und dass der Zeitverlauf eine nachfolgende zweite Phase umfasst, in welcher die elektrische Betätigungseinrichtung mittels eines zweiten regelbaren Stroms bestromt wird, wobei der zweite Strom kleiner ist als der erste Strom, und dass eine Dauer der ersten Phase und/oder eine Stärke des zweiten regelbaren Stroms verändert wird, um den Grenzfall zu ermitteln. Damit wird ein drittes zeitliches "Stromprofil" beschrieben, welches zur Durchführung des Verfahrens besonders geeignet ist.

Ergänzend kann bei den oben beschriebenen drei Alternativen der Zeitverlauf der Ansteuerung eine auf die zweite Phase folgende dritte Phase umfassen, in welcher die elektrische Betätigungseinrichtung mittels einer Pulsweitenmodulation oder eines dritten regelbaren Stroms angesteuert bzw. bestromt wird. Dadurch kann ein eventuelles verfrühtes Abfallen des Ventilelements von der zweiten Position zurück in die erste Position aufgrund eventuell zu geringer Ströme vermieden werden. In der dritten Phase ist der effektive Strom im Allgemeinen größer als in der zweiten Phase.

Der weiter oben beschriebene Offsetwert kann gemäß einer weiteren Ausgestaltung des Verfahrens in Abhängigkeit von dem Kraftstoffdruck in dem Druckspeicher und/oder einer Kraftstofftemperatur und/oder einem elektrischen Widerstand von an die elektrische Betätigungseinrichtung angeschlossenen elektrischen Leitungen vorgegeben werden. Dadurch kann der Offsetwert passend zu vorliegenden Betriebsparametern bemessen werden, so dass der Offsetwert vergleichsweise klein gewählt werden kann. Somit ist die zweite Ansteuerenergie entsprechend niedrig, ohne dass die Sicherheit des Schaltens des Ventilelements vermindert wird. Vorzugsweise können mehrere Offsetwerte in Abhängigkeit von mehreren Betriebsparametern in einem Kennfeld der Steuer- und/oder Regeleinrichtung für die Brennkraftmaschine abgespeichert werden.

Die besagte Steuer- und/oder Regeleinrichtung für die Brennkraftmaschine ist für das erfindungsgemäße Verfahren besonders nützlich, da hierin zentral eine Anzahl von Betriebsgrößen des Kraftstoffsystems und der Brennkraftmaschine bereits vorliegen, um das Verfahren durchzuführen. Vorzugsweise erfolgt dabei die Durchführung des Verfahrens mittels eines Computerprogramms.

Nachfolgend werden beispielhafte Ausführungsformen der Erfindung unter Bezugnahme auf die Zeichnung erläutert. In der Zeichnung zeigen:
- Figur 1: ein Kraftstoffsystem für eine Brennkraftmaschine;
- Figur 2: eine Kraftstofffördereinrichtung, umfassend eine Zumesseinrichtung, eine elektrische Betätigungseinrichtung und eine Kraftstoffpumpe;
- Figur 3: ein Zeitdiagramm für eine Ansteuerung der elektrischen Betätigungseinrichtung;
- Figur 4: ein Zeitdiagramm mit Strömen zur Ansteuerung der elektrischen Betätigungseinrichtung;
- Figur 5: ein Zeitdiagramm mit Zeitverläufen eines Betriebsgeräuschs der elektrischen Betätigungseinrichtung; und
- Figur 6: ein Flussdiagramm zur Durchführung eines Verfahrens zum Betreiben des Kraftstoffsystems.

Es werden für funktionsäquivalente Elemente und Größen in allen Figuren auch bei unterschiedlichen Ausführungsformen die gleichen Bezugszeichen verwendet.

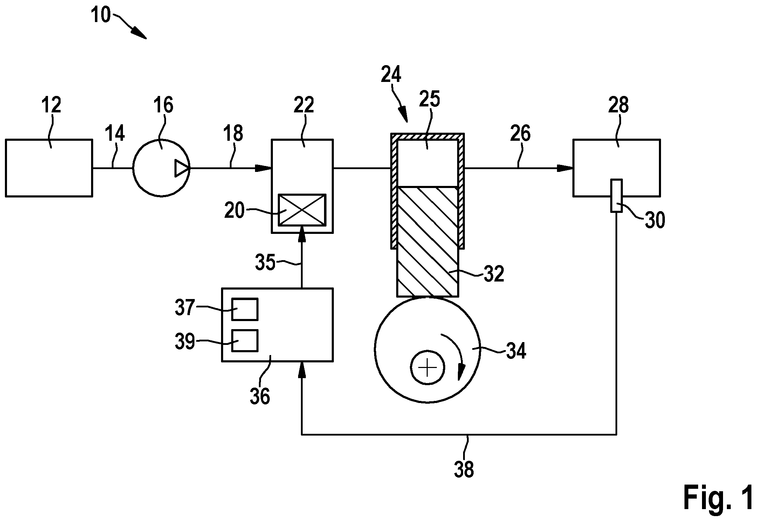

Figur 1 zeigt ein Kraftstoffsystem 10 für eine Brennkraftmaschine (nicht dargestellt) in einer stark vereinfachten Darstellung. Aus einem Kraftstofftank 12 wird Kraftstoff über eine Saugleitung 14, mittels einer Vorförderpumpe 16, über eine Niederdruckleitung 18, und über ein von einer elektrischen Betätigungseinrichtung 20 - welche vorliegend als elektromagnetische Betätigungseinrichtung ausgeführt ist - betätigbares Mengensteuerventil 22 einer von der Brennkraftmaschine mechanisch angetriebenen Kolbenpumpe 24 (Hochdruckpumpe) zugeführt. Das Mengensteuerventil 22 bildet eine Zumesseinrichtung zur Bemessung einer Fördermenge des Kraftstoffs.

Stromabwärts ist die Kolbenpumpe 24 über eine Hochdruckleitung 26 an einen Druckspeicher 28 (Hochdruckspeicher, "Common Rail") angeschlossen. An dem Druckspeicher 28 ist ein Drucksensor 30 angeordnet. Die Kolbenpumpe 24 umfasst einen Kolben 32, welcher in der Zeichnung vertikal bewegbar und vorliegend mittels einer Exzenterscheibe 34 antreibbar ist. Die elektrische Betätigungseinrichtung 20 wird über elektrische Leitungen 35 von einer Steuer- und/oder Regeleinrichtung 36 angesteuert. Die Steuer- und/oder Regeleinrichtung 36 umfasst einen Datenspeicher 37 und ein Computerprogramm 39. Weiterhin ist die Steuer- und/oder Regeleinrichtung 36 über eine elektrische Leitung 38 mit dem Drucksensor 30 verbunden.

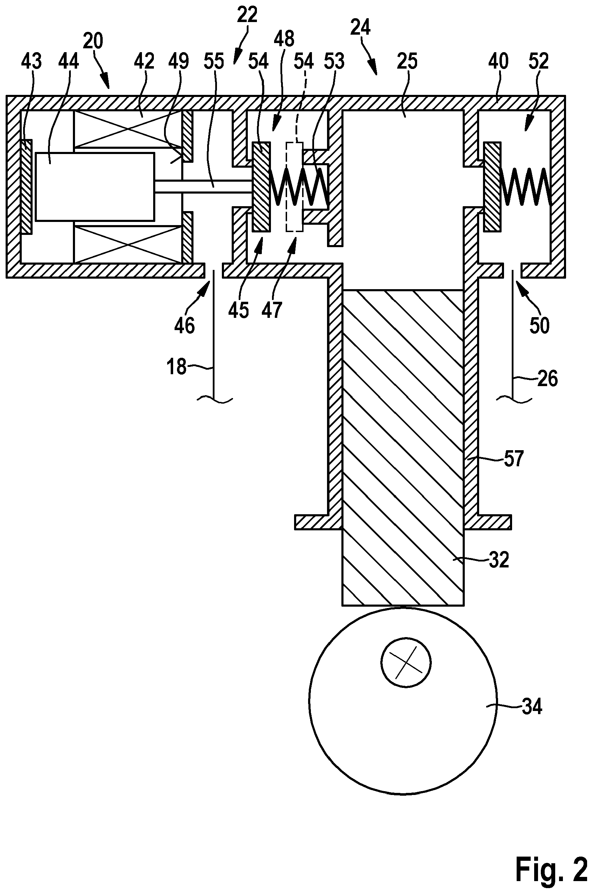

Es versteht sich, dass das Mengensteuerventil 22 auch als Baueinheit (siehe Figur 2) mit der Kolbenpumpe 24 ausgebildet sein kann. Insbesondere kann das Mengensteuerventil 22 ein zwangsweise öffenbares Einlassventil 48 (siehe Figur 2) der Kolbenpumpe 24 sein.

Beim Betrieb des Kraftstoffsystems 10 fördert die Vorförderpumpe 16 Kraftstoff vom Kraftstofftank 12 in die Niederdruckleitung 18. Dabei steuert das Mengensteuerventil 22 die einem Förderraum 25 der Kolbenpumpe 24 zugeführte Kraftstoffmenge. Das Mengensteuerventil 22 kann in Abhängigkeit von einem jeweiligen Bedarf an Kraftstoff geschlossen und geöffnet werden. Der Kraftstoff ist beispielsweise Benzin oder Dieselkraftstoff.

Figur 2 zeigt die Kolbenpumpe 24 der Figur 1 zusammen mit dem Mengensteuerventil 22 und der elektrischen Betätigungseinrichtung 20 in einer etwas detaillierteren, jedoch ebenfalls schematischen Darstellung. Die Kolbenpumpe 24 weist ein Gehäuse 40 auf, in dessen in der Zeichnung linkem Abschnitt die elektrische Betätigungseinrichtung 20 mit einer Magnetspule 42 und einem Anker 44 angeordnet ist. In einem in der Zeichnung linken Endabschnitt des Gehäuses 40 ist ein Ruhesitz 43 für den Anker 44 angeordnet.

Weiterhin umfasst die Kolbenpumpe 24 einen mit der Niederdruckleitung 18 verbundenen Einlass 46 mit dem Einlassventil 48, und einen mit der Hochdruckleitung 26 verbundenen Auslass 50 mit einem Auslassventil 52. Das Einlassventil 48 umfasst eine Ventilfeder 53 sowie ein Ventilelement 54. Das Einlassventil 48 ist über eine Öffnung (ohne Bezugszeichen) mit dem Förderraum 25 hydraulisch verbunden.

Das Ventilelement 54 kann mittels einer in der Zeichnung horizontal verschiebbaren und mit dem Anker 44 gekoppelten Ventilnadel 55 zwangsweise in einer zweiten Position 47 (gestrichelt dargestellt) gehalten werden. Eine erste Position 45 entspricht einer geschlossenen Zumesseinrichtung 22 und die zweite Position 47 entspricht einer geöffneten Zumesseinrichtung 22.

Ist die elektrische Betätigungseinrichtung 20 nicht bestromt, so kann das Einlassventil 48 durch die Kraft der Ventilfeder 53 geschlossen werden ("stromlos geschlossen"). Bei bestromter elektrischer Betätigungseinrichtung 20 kann der Anker 44 mittels Magnetkraft in der Zeichnung nach rechts gegen einen Hubanschlag 49 bewegt werden, und das Ventilelement 54 kann somit zwangsweise von der ersten Position 45 in die zweite Position 47 schalten. Dadurch öffnet das Einlassventil 48. Durch das (aktive) Schalten des Ankers 44 bzw. des Ventilelements 54 kann dabei ein der jeweiligen Stärke der Ansteuerung der elektrischen Betätigungseinrichtung 20 entsprechendes Betriebsgeräusch auftreten.

Im Betrieb des Kraftstoffsystems 10 fördert die Kolbenpumpe 24 Kraftstoff von dem Einlass 46 zu dem Auslass 50, wobei das Auslassventil 52 entsprechend einem jeweiligen Druckunterschied zwischen dem Förderraum 25 und dem Auslass 50 öffnet oder schließt. Das Einlassventil 48 wird bei Vollförderung der Kolbenpumpe 24 von einem jeweiligen Druckunterschied zwischen dem Einlass 46 und dem Förderraum 25 beaufschlagt. Bei einer gewünschten Teilförderung wird die elektrische Betätigungseinrichtung 20 während eines Förderhubs ab einem vorgegebenen Zeitpunkt bestromt, wodurch das Einlassventil 48 nicht schließen kann und der dann noch im Förderraum 25 vorhandene Kraftstoff zurück in die Niederdruckleitung 18 gefördert wird. Die innerhalb des Gehäuses 40 angeordneten Volumina der Kolbenpumpe 24 sind im Wesentlichen mit Kraftstoff gefüllt.

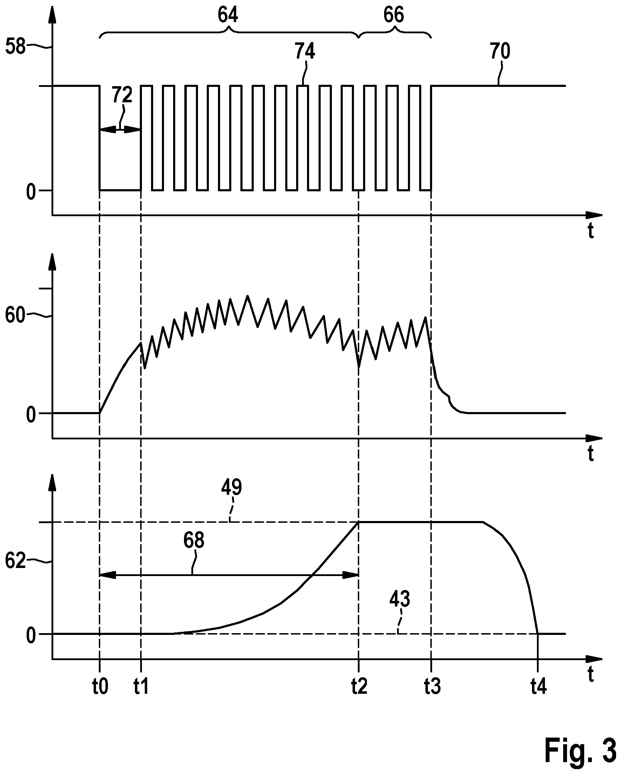

Figur 3 zeigt ein Zeitdiagramm für eine Ansteuerung der elektrischen Betätigungseinrichtung 20. Ein in der Zeichnung oberes Zeitdiagramm zeigt eine an einen ersten Anschluss der Magnetspule 42 angeschaltete Ansteuerspannung 58. Ein in der Zeichnung mittleres Zeitdiagramm zeigt einen zu der Ansteuerspannung 58 gehörenden Strom 60. Ein in der Zeichnung unteres Zeitdiagramm zeigt einen zu der Ansteuerspannung 58 bzw. dem Strom 60 gehörenden Hub 62 des Ankers 44.

Die Diagramme weisen einen zueinander gleichen Zeitmaßstab (Zeit t) auf. Alle drei Diagramme weisen einen jeweiligen Nullwert der Ansteuerspannung 58 bzw. des Stroms 60 bzw. des Hubs 62 auf, welcher geringfügig oberhalb einer zugehörigen Abszisse gezeichnet ist. Gemeinsam ist allen drei Diagrammen ein erster Zeitbereich 64, der einer Anzugsphase des Ankers 44 entspricht, sowie ein nachfolgender zweiter Zeitbereich 66, der einer Bestromung während einer Haltephase des Ankers 44 an dem Hubanschlag 49 entspricht. In dem unteren Diagramm entspricht der Nullwert einem Anschlag des Ankers 44 an dem Ruhesitz 43 und eine horizontale gestrichelte Linie entspricht dem Hubanschlag 49.

Die in der Figur 3 dargestellte Ansteuerung der Magnetspule 42 bzw. der elektrischen Betätigungseinrichtung 20 weist ein "reduziertes Stromprofil" auf, bei welchem eine Anzugsgeschwindigkeit des Ankers 44 in Richtung der zweiten Position 47 des Ventilelements 54 vergleichsweise gering ist und eine zugehörige Anzugsdauer 68 entsprechend groß ist. Daher kann das dargestellte Stromprofil insbesondere bei vergleichsweise niedrigen Drehzahlen der Brennkraftmaschine zum Schalten des Ventilelements 54 verwendet werden.

In dem oberen Diagramm ist die Ansteuerspannung 58 eingetragen. Dabei ist ein zweiter Anschluss (nicht dargestellt) der Magnetspule 42 dauernd gegen eine Batteriespannung 70 geschaltet. Der erste Anschluss (nicht dargestellt) der Magnetspule 42 kann mittels eines elektronischen Schalters zwischen der Batteriespannung 70 und einem Massepotenzial ("0") geschaltet werden, wodurch die Magnetspule 42 bzw. die elektrische Betätigungseinrichtung 20 angesteuert wird und der Strom 60 fließen kann.

Zu einem Zeitpunkt t0 beginnt eine erste Phase 72 einer Ansteuerung. Die Ansteuerspannung 58 wird während der ersten Phase 72 dauernd auf Null geschaltet, wodurch der Strom 60 in der Magnetspule 42 in etwa rampenförmig ansteigt. Zu einem folgenden Zeitpunkt t1 - wobei der Anker 44 noch nicht an dem Hubanschlag 49 angeschlagen ist - endet die erste Phase 72, und eine zweite Phase 74 beginnt. Während der zweiten Phase 74 wird die Ansteuerspannung 58 nach der Art einer Pulsweitenmodulation getaktet und der Strom 60 nimmt einen in etwa sägezahnförmigen Zeitverlauf an. Zu einem folgenden Zeitpunkt t2 schlägt der Anker 44 an den Hubanschlag 49. Dabei ist eine Anzugsdauer (t2-t0) des Ankers 44 länger als eine Dauer (t1-t0) der ersten Phase 72.

Ergänzend kann ein Tastverhältnis der in der zweiten Phase 74 erfolgenden Pulsweitenmodulation verändert werden. Dadurch ist es möglich, den Zeitverlauf des Stroms 60 nahezu beliebig zu verändern und somit das Schaltverhalten des Mengensteuerventils 22 zu optimieren. Zu einem auf den Zeitpunkt t2 folgenden Zeitpunkt t3 wird die Ansteuerung und damit die Bestromung der Magnetspule 42 beendet. Zu einem darauf folgenden Zeitpunkt t4 erreicht der Anker 44 wieder den Ruhesitz 43.

Die Ansteuerung der elektrischen Betätigungseinrichtung 20 kann verschiedenartig erfolgen. Beispielsweise wird die elektrische Betätigungseinrichtung 20 während der ersten Phase 72 mit einem monoton steigenden Verlauf des Stroms 60 oder mit einem ersten regelbaren Strom 60 angesteuert. Ebenso kann die elektrische Betätigungseinrichtung 20 während der zweiten Phase 74 nach der Art einer Pulsweitenmodulation angesteuert werden, oder mit einem zweiten regelbaren Strom angesteuert werden. Im Allgemeinen ist dabei ein mittlerer Strom 60 in der zweiten Phase 74 kleiner als in der ersten Phase 72. Ergänzend kann eine auf die zweite Phase 74 folgende dritte Phase (nicht dargestellt) vorgesehen sein, in welcher die elektrische Betätigungseinrichtung 20 mittels einer Pulsweitenmodulation oder eines dritten regelbaren Stroms 60 angesteuert bzw. bestromt wird. Im Allgemeinen ist dabei ein mittlerer Strom 60 in der dritten Phase größer als in der zweiten Phase 74. Zur Ermittlung eines weiter unten beschriebenen Grenzfalls können die Längen der drei Phasen und/oder die in den jeweiligen Phasen fließenden Ströme individuell verändert werden.

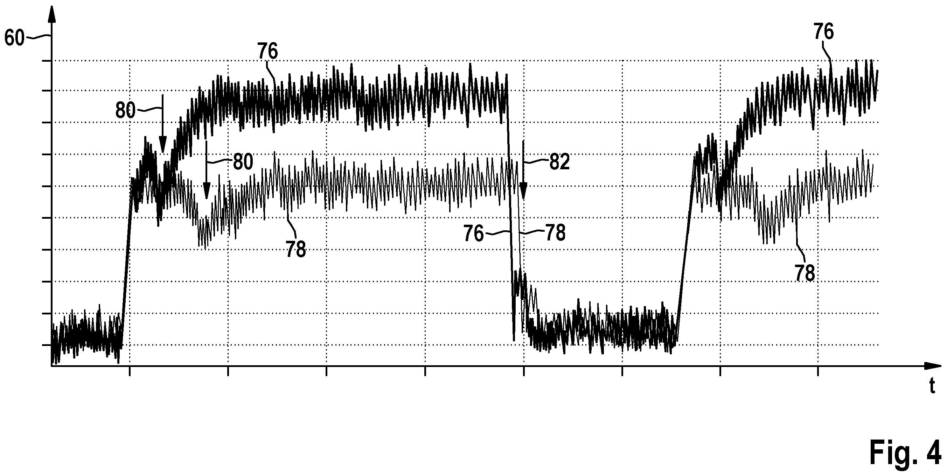

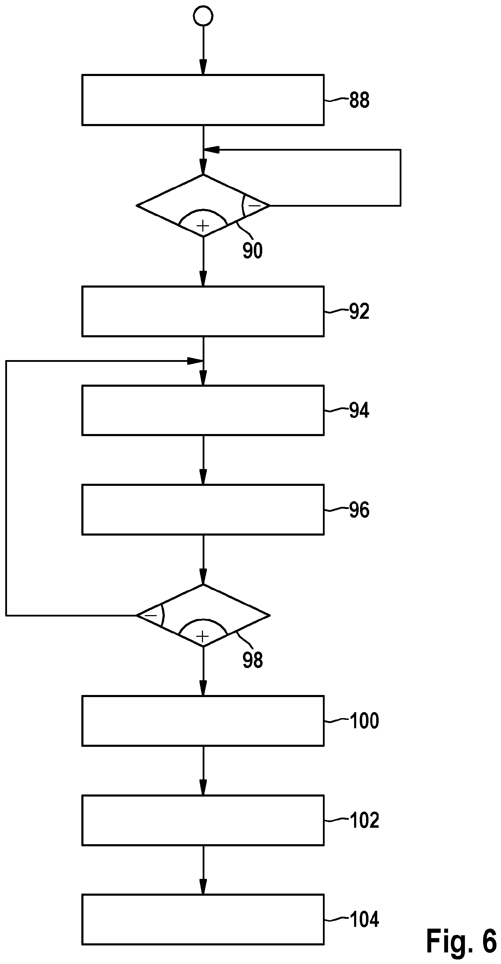

Figur 4 zeigt zwei Stromkurven 76 und 78 (Stromprofile, Zeitverlauf des Stroms 60) mit Strömen 60 zur Ansteuerung der elektrischen Betätigungseinrichtung 20, ähnlich zu dem mittleren Zeitdiagramm der Figur 3. Die Stromkurve 76 charakterisiert ein erstes Ansteuern der elektrischen Betätigungseinrichtung 20, bei welchem das Ventilelement 54 unabhängig von möglichen Exemplarstreuungen sicher von der ersten Position 45 in die zweite Position 47 schaltet. Beispielsweise entspricht die Stromkurve 76 einem Zeitverlauf des Stroms 60, wie er ohne eine Anwendung des weiter unten bei der Figur 6 beschriebenen Verfahrens eingestellt sein kann.

Die Stromkurve 78 charakterisiert ein zweites Ansteuern des elektrischen Betätigungseinrichtung 20, bei welchem das Ventilelement 54 mit einer verminderten ("zweiten") Ansteuerenergie angesteuert wird. Vorliegend wird allgemein unter "Ansteuerenergie" ein jeweiliger Zeitverlauf des Stroms 60 verstanden. Ein erster Pfeil 80 charakterisiert einen Zeitpunkt, zu dem das Mengensteuerventil 22 öffnet, und ein zweiter Pfeil 82 charakterisiert einen Zeitpunkt, zu dem das Mengensteuerventil 22 schließt.

Die zweite Ansteuerenergie ist eine um einen Offsetwert erhöhte "erste" Ansteuerenergie. Die erste Ansteuerenergie entspricht dem oben genannten Grenzfall, bei dem das Ventilelement 54 gerade noch bzw. gerade nicht mehr von der ersten Position 45 in die zweite Position 47 schaltet. Der Offsetwert ist derart bemessen, dass die zweite Ansteuerenergie deutlich niedriger als eine der Stromkurve 76 entsprechende Ansteuerenergie ist, wobei jedoch das Ventilelement 54 in die zweite Position 47 schalten kann und somit die Sicherheit des Schaltens nicht vermindert wird. Man erkennt, dass die zweite Ansteuerenergie der Stromkurve 78 in etwa nur zwei Drittel der Ansteuerenergie der Stromkurve 76 beträgt.

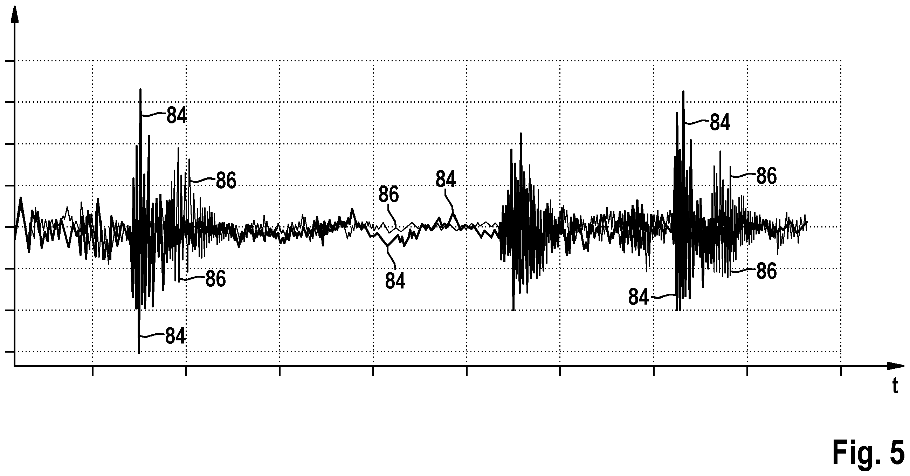

Figur 5 zeigt ein Zeitdiagramm mit Zeitverläufen eines ersten Betriebsgeräusches 84 und eines zweiten Betriebsgeräusches 86 der elektrischen Betätigungseinrichtung 20. Dabei entspricht das erste Betriebsgeräusch 84 der Stromkurve 76 und das zweite Betriebsgeräusches 86 der Stromkurve 78 gemäß Figur 4. Man erkennt, dass das zweite Betriebsgeräusch 86 in Bezug auf das erste Betriebsgeräusch 84 deutlich vermindert ist.

Figur 6 zeigt ein Flussdiagramm für ein Verfahren zum Betreiben des Kraftstoffsystems 10. Das vorliegende Flussdiagramm kann vorzugsweise mittels des Computerprogramms 39 abgearbeitet werden. In einem Startblock 88 beginnt die dargestellte Prozedur.

In einem Abfrageblock 90 wird geprüft, ob eine Drehzahl der Brennkraftmaschine niedriger als ein Schwellwert ist. Falls unzutreffend, so wird an den Anfang des Abfrageblocks 90 zurück verzweigt. Falls zutreffend, so wird an einen folgenden Block 92 verzweigt. In dem Block 92 wird die elektrische Betätigungseinrichtung 20 in einem ersten Zyklus derart angesteuert, dass das Ventilelement 54 sicher in die zweite Position 47 gezwungen wird, beispielsweise unter Verwendung der Stromkurve 76.

Mittels des Abfrageblocks 90 kann zwischen einer ersten und einer zweiten Betriebsart des Mengensteuerventils 22 umgeschaltet werden. Die erste Betriebsart charakterisiert vergleichsweise hohe Drehzahlen, wobei ein "maximales Stromprofil" zur Ansteuerung der elektrischen Betätigungseinrichtung 20 verwendet wird. Die zweite Betriebsart charakterisiert vergleichsweise niedrige Drehzahlen, wobei eine stromreduzierte Ansteuerung (englisch "reduced current control", RECUR) der elektrischen Betätigungseinrichtung 20 verwendet wird. Beispielsweise charakterisiert die zweite Betriebsart so genannte "leerlaufnahe" Drehzahlen.

In einem folgenden Block 94 wird die elektrische Betätigungseinrichtung 20 in mindestens einem zweiten Zyklus mit einer um einen Differenzwert schrittweise fallenden Ansteuerenergie angesteuert.

In einem folgenden Block 96 wird ein mittels des Drucksensors 30 ermittelter Kraftstoffdruck ("Druck") in dem Druckspeicher 28 ausgewertet. Beispielsweise wird geprüft, ob der Druck und/oder eine Druckänderung und/oder eine Druckänderungsgeschwindigkeit in dem Druckspeicher 28 einen Schwellwert überschritten hat. Dabei wird berücksichtigt, dass dann, wenn eine aktuelle Ansteuerenergie der elektrischen Betätigungseinrichtung 20 nicht (mehr) ausreicht, um das Ventilelement 54 während eines Förderhubs von der ersten in die zweite Position 45 bzw. 47 zu zwingen, die Kolbenpumpe 24 eine so genannte Vollförderung durchführt. Dieser Fall der Vollförderung kann mittels eines vergleichsweise schnellen Anstiegs des Drucks in dem Druckspeicher 28 ermittelt werden.

In einem folgenden Abfrageblock 98 wird geprüft, ob im vorhergehenden Block 96 eine den Schwellwert überschreitende Druckänderung ermittelt wurde. Falls unzutreffend, so wird das Verfahren am Anfang des Blocks 94 fortgesetzt, wobei in dem Block 94 die Ansteuerenergie weiter vermindert wird. Falls jedoch der Schwellwert überschritten wurde, so wird daraus geschlossen, dass das Mengensteuerventil 22 nicht (mehr) öffnet. Dies entspricht einem Grenzfall, bei dem das Ventilelement 54 gerade noch bzw. gerade nicht mehr in die zweite Position 47 gezwungen wird. Alternativ oder ergänzend kann in den Blöcken 96 und 98 an Stelle des Kraftstoffdrucks bzw. außer dem Kraftstoffdruck auch die Ansteuerspannung 58 und/oder der Strom 60 ausgewertet werden, um den Grenzfall zu ermitteln.
Dann wird zu einem folgenden Block 100 verzweigt, in welchem die dem Grenzfall entsprechende erste Ansteuerenergie ermittelt wird. In Abhängigkeit von dem Kraftstoffdruck in dem Druckspeicher 28 und einer Kraftstofftemperatur und einem elektrischen Widerstand der elektrischen Leitungen 35 wird der oben bereits beschriebene Offsetwert ermittelt bzw. vorgegeben und zu der ersten Ansteuerenergie addiert. Die Summe ergibt die zweite Ansteuerenergie. Es erfolgt somit eine Adaption der Ansteuerung der elektrischen Betätigungseinrichtung 20 an ein exemplarabhängiges und/oder drehzahlabhängiges Schaltverhalten des Mengensteuerventils 22. Die erste und die zweite Ansteuerenergie sowie optional die Drehzahl und ein vorgebbarer Zeitverlauf der Ansteuerung werden für nachfolgende Ansteuerungen der elektrischen Betätigungseinrichtung 20 in dem Datenspeicher 37 abgespeichert. Dies erfolgt beispielsweise unter Verwendung eines Kennfelds.
In einem anschließenden Block 102 wird die elektrische Betätigungseinrichtung 20 nachfolgend mit der zweiten Ansteuerenergie angesteuert. Es ist jedoch auch möglich, die erste bzw. die zweite Ansteuerenergie sowie den Offsetwert in Abhängigkeit von der Drehzahl der Brennkraftmaschine zu ermitteln. Dadurch kann das Ansteuern des Mengensteuerventils 22 auch in Abhängigkeit von der Drehzahl erfolgen. In einem Endeblock 104 endet die in der Figur 6 dargestellte Prozedur.

Es versteht sich, dass die Ermittlung des beschriebenen Grenzfalls nicht erfindungsgemäß auch in umgekehrter Weise entsprechend erfolgen kann. Dabei wird, ausgehend von einer Ansteuerenergie, bei welcher das Ventilelement 54 sicher nicht in die zweite Position 47 schaltet, diese Ansteuerenergie schrittweise erhöht, bis der Grenzfall erreicht ist. Weiterhin kann auch nicht erfindungsgemäß schrittweise abwechselnd die Ansteuerenergie erhöht und vermindert wird, wodurch der Grenzfall gegebenenfalls genauer ermittelt werden kann.

## Patentansprüche

1. Verfahren zum Betreiben eines Kraftstoffsystems (10) für eine Brennkraftmaschine, wobei ein Mengensteuerventil (22) zur Bemessung einer Fördermenge einer Hochdruckpumpe mittels einer elektrischen Betätigungseinrichtung (20) geöffnet und/oder geschlossen werden kann, und wobei ein Ventilelement (54) das Mengensteuerventil (22) bei nicht angesteuerter Betätigungseinrichtung (20) in einer geschlossenen Position (45) und bei angesteuerter Betätigungseinrichtung (20) in eine geöffnete Position (47) schalten kann, **gekennzeichnet durch** die folgenden Schritte:
(a) Ansteuern der elektrischen Betätigungseinrichtung (20) in mindestens einem ersten Zyklus derart, dass das Ventilelement (54) sicher in die geöffnete Position (47) schaltet;
(b) Ansteuern der elektrischen Betätigungseinrichtung (20) in mindestens einem zweiten Zyklus derart, dass die elektrische Betätigungseinrichtung (20) von Ansteuerung zu Ansteuerung mit schrittweise fallender Ansteuerenergie angesteuert wird, bis ein Grenzfall erreicht ist, bei dem das Ventilelement (54) gerade nicht mehr in die geöffnete Position (47) schaltet; wobei der Grenzfall durch einen Anstieg in einem Zeitverlauf des Raildrucks erkannt wird.
(c) Ermitteln einer ersten Ansteuerenergie, welche dem Grenzfall entspricht;
(d) Nachfolgendes Ansteuern der Betätigungseinrichtung (20) unter Berücksichtigung der ersten Ansteuerenergie.

2. Verfahren nach Anspruche 1, **dadurch gekennzeichnet, dass** nach dem Schritt (c) die erste Ansteuerenergie um einen Offsetwert auf eine zweite Ansteuerenergie erhöht wird, wobei der Offsetwert derart bemessen ist, dass das Ventilelement (54) in die geöffnete Position (47) schalten kann, und die nachfolgende Ansteuerung im Schritt (d) mit der zweiten Ansteuerenergie erfolgt.

3. Verfahren nach einem der vorhergehenden Ansprüche, **dadurch gekennzeichnet, dass** der Grenzfall ermittelt wird, indem ein Druck und/oder eine Druckänderung und/oder eine Druckänderungsgeschwindigkeit in einem Druckspeicher (28) des Kraftstoffsystems (10) ermittelt und mit einem Schwellwert verglichen wird.

4. Verfahren nach wenigstens einem der vorhergehenden Ansprüche, **dadurch gekennzeichnet, dass** die zweite Ansteuerenergie und/oder ein der zweiten Ansteuerenergie entsprechender Zeitverlauf der Ansteuerung in einem Datenspeicher (37) abgespeichert wird.

5. Verfahren nach wenigstens einem der vorhergehenden Ansprüche, **dadurch gekennzeichnet, dass** ein Zeitverlauf der Ansteuerung eine erste Phase (72) mit einem monoton steigenden Stromverlauf umfasst, und dass der Zeitverlauf eine nachfolgende zweite Phase (74) umfasst, in welcher die elektrische Betätigungseinrichtung (20) mittels einer Pulsweitenmodulation angesteuert wird, und dass eine Dauer der ersten Phase (72) und/oder ein Tastverhältnis der Pulsweitenmodulation verändert wird, um den Grenzfall zu ermitteln.

6. Verfahren nach wenigstens einem der Ansprüche 1 bis 5, **dadurch gekennzeichnet, dass** ein Zeitverlauf der Ansteuerung eine erste Phase (72) mit einem monoton steigenden Stromverlauf umfasst, und dass der Zeitverlauf eine nachfolgende zweite Phase (74) umfasst, in welcher die elektrische Betätigungseinrichtung (20) mittels eines regelbaren Stroms (60) bestromt wird, und dass eine Dauer der ersten Phase (72) und/oder eine Stärke des regelbaren Stroms (60) verändert wird, um den Grenzfall zu ermitteln.

7. Verfahren nach wenigstens einem der Ansprüche 1 bis 5, **dadurch gekennzeichnet, dass** ein Zeitverlauf der Ansteuerung eine erste Phase (72) umfasst, in welcher die elektrische Betätigungseinrichtung (20) mittels eines ersten regelbaren Stroms (60) bestromt wird, und dass der Zeitverlauf eine nachfolgende zweite Phase (74) umfasst, in welcher die elektrische Betätigungseinrichtung (20) mittels eines zweiten regelbaren Stroms (60) bestromt wird, wobei der zweite Strom (60) kleiner ist als der erste Strom (60), und dass eine Dauer der ersten Phase (72) und/oder eine Stärke des zweiten regelbaren Stroms (60) verändert wird, um den Grenzfall zu ermitteln.

8. Verfahren nach einem der Ansprüche 5 bis 7, **dadurch gekennzeichnet, dass** der Zeitverlauf der Ansteuerung eine auf die zweite Phase (74) folgende dritte Phase umfasst, in welcher die elektrische Betätigungseinrichtung (20) mittels einer Pulsweitenmodulation oder eines dritten regelbaren Stroms (60) angesteuert bzw. bestromt wird.

9. Verfahren nach wenigstens einem der vorhergehenden Ansprüche, **dadurch gekennzeichnet, dass** der Offsetwert in Abhängigkeit von einem Kraftstoffdruck in einem Druckspeicher (28) und/oder einer Kraftstofftemperatur und/oder einem elektrischen Widerstand von an die elektrische Betätigungseinrichtung (20) angeschlossenen elektrischen Leitungen (35) vorgegeben wird.

10. Steuer- und/oder Regeleinrichtung (36) für eine Brennkraftmaschine zur Durchführung des Verfahrens nach wenigstens einem der Ansprüche 1 bis 9.

11. Computerprogramm mit einem Programmcode, der, wenn der Programmcode in einem Computer ausgeführt wird, erreicht, dass der Computer ein Verfahren nach wenigstens einem der Ansprüche 1 bis 9 ausführt.

## Claims

1. Method for operating a fuel system (10) for an internal combustion engine, wherein a flow control valve (22) for metering a delivery flow of a highpressure pump can be opened and/or closed by means of an electrical actuating device (20), and wherein a valve element (54) can switch the flow control valve (22) into a closed position (45) when the actuating device (20) is not activated and into an opened position (47) when the actuating device (20) is activated, **characterized by** the following steps:
(a) activating the electrical actuating device (20) in at least one first cycle such that the valve element (54) reliably switches into the opened position (47);
(b) activating the electrical actuating device (20) in at least one second cycle such that the electric actuating device (20) is activated with progressively decreasing activation energy from one activation to the next activation, until a limit situation is reached in which the valve element (54) just no longer switches into the opened position (47); wherein the limit situation is identified by means of an increase in a profile with respect to time of the rail pressure;
(c) determining a first activation energy which corresponds to the limit situation;
(d) subsequently activating the actuating device (20) taking into consideration the first activation energy.

2. Method according to Claim 1, **characterized in that**, after step (c), the first activation energy is increased by an offset value to a second activation energy, wherein the offset value is dimensioned such that the valve element (54) can switch into the opened position (47), and the subsequent activation in step (d) is performed with the second activation energy.

3. Method according to either of the preceding claims, **characterized in that** the limit situation is determined by virtue of a pressure and/or a change in pressure and/or a rate of change in pressure in a pressure accumulator (28) of the fuel system (10) being determined and compared with a limit value.

4. Method according to at least one of the preceding claims, **characterized in that** the second activation energy and/or a profile with respect to time of the activation, corresponding to the second activation energy, is stored in a data memory (37).

5. Method according to at least one of the preceding claims, **characterized in that** a profile with respect to time of the activation comprises a first phase (72) with a monotonously increasing current profile, and **in that** the profile with respect to time comprises a subsequent second phase (74), in which the electrical actuating device (20) is activated by means of pulse width modulation, and **in that** a duration of the first phase (72) and/or a duty factor of the pulse width modulation is varied in order to determine the limit situation.

6. Method according to at least one of Claims 1 to 5, **characterized in that** a profile with respect to time of the activation comprises a first phase (72) with a monotonously increasing current profile, and **in that** the profile with respect to time comprises a subsequent second phase (74), in which the electrical actuating device (20) is energized with a controllable current (60), and **in that** a duration of the first phase (72) and/or an intensity of the controllable current (60) is varied in order to determine the limit situation.

7. Method according to at least one of Claims 1 to 5, **characterized in that** a profile with respect to time of the activation comprises a first phase (72), in which the electrical actuating device (20) is energized with a first controllable current (60), and **in that** the profile with respect to time comprises a subsequent second phase (74), in which the electrical actuating device (20) is energized with a second controllable current (60), wherein the second current (60) is lower than the first current (60), and **in that** a duration of the first phase (72) and/or an intensity of the second controllable current (60) is varied in order to determine the limit situation.

8. Method according to any of Claims 5 to 7, **characterized in that** the profile with respect to time of the activation comprises a third phase, which follows the second phase (74) and in which the electrical actuating device (20) is activated or energized by means of pulse width modulation or with a third controllable current (60).

9. Method according to at least one of the preceding claims, **characterized in that** the offset value is predefined in a manner dependent on a fuel pressure in a pressure accumulator (28) and/or on a fuel temperature and/or on an electrical resistance of electrical lines (35) connected to the electrical actuating device (20).

10. Open-loop and/or closed-loop control device (36) for an internal combustion engine for carrying out the method according to at least one of Claims 1 to 9.

11. Computer program having program code which, when the program code is executed on a computer, achieves that the computer carries out a method according to at least one of Claims 1 to 9.

## Revendications

1. Procédé pour faire fonctionner un système de carburant (10) pour un moteur à combustion interne, une vanne de régulation de débit (22) destinée à doser un débit de refoulement d'une pompe à haute pression pouvant être ouverte et/ou fermée au moyen d'un dispositif d'actionnement (20) électrique et un élément formant vanne (54) pouvant commuter la vanne de régulation de débit (22) dans une position fermée (45) lorsque le dispositif d'actionnement (20) n'est pas excité et dans une position ouverte (47) lorsque le dispositif d'actionnement (20) est excité, **caractérisé par** les étapes suivantes :
(a) excitation du dispositif d'actionnement (20) électrique dans au moins un premier cycle de telle sorte que l'élément formant vanne (54) commute avec certitude dans la position ouverte (47) ;
(b) excitation du dispositif d'actionnement (20) électrique dans au moins un deuxième cycle de telle sorte que le dispositif d'actionnement (20) électrique est excité d'une excitation à une excitation avec une énergie d'excitation à décroissance graduelle jusqu'à ce qu'un cas limite soit atteint, avec lequel l'élément formant vanne (54) ne commute tout juste plus dans la position ouverte (47) ; le cas limité étant reconnu par une augmentation dans une courbe dans le temps de la pression de rampe de distribution ;
(c) détermination d'une première énergie d'excitation qui correspond au cas limite ;
(d) excitation suivante du dispositif d'actionnement (20) en tenant compte de la première énergie d'excitation.

2. Procédé selon la revendication 1, **caractérisé en ce qu'**après l'étape (c), la première énergie d'excitation est augmentée d'une valeur de décalage à une deuxième énergie d'excitation, la valeur de décalage étant dosée de telle sorte que l'élément formant vanne (54) peut commuter dans la position ouverte (47) et l'excitation suivante à l'étape (d) est effectuée avec la deuxième énergie d'excitation.

3. Procédé selon l'une des revendications précédentes, **caractérisé en ce que** le cas limite est déterminé en déterminant une pression et/ou une variation de pression et/ou une vitesse de variation de pression dans un accumulateur de pression (28) du système de carburant (10) et en la comparant à une valeur de seuil.

4. Procédé selon l'une des revendications précédentes, **caractérisé en ce que** la deuxième énergie d'excitation et/ou une courbe dans le temps de l'excitation correspondant à la deuxième énergie d'excitation est enregistrée dans une mémoire de données (37) .

5. Procédé selon l'une des revendications précédentes, **caractérisé en ce qu'**une courbe dans le temps de l'excitation comprend une première phase (72) avec un tracé du courant à croissance monotone, et **en ce que** la courbe dans le temps comprend une deuxième phase (74) suivante dans laquelle le dispositif d'actionnement (20) électrique est excité au moyen d'une modulation d'impulsions en largeur, et **en ce qu'**une durée de la première phase (72) et/ou un rapport cyclique de la modulation d'impulsions en largeur est modifié afin de déterminer le cas limite.

6. Procédé selon l'une des revendications 1 à 5, **caractérisé en ce qu'**une courbe dans le temps de l'excitation comprend une première phase (72) avec un tracé du courant à croissance monotone, et **en ce que** la courbe dans le temps comprend une deuxième phase (74) suivante dans laquelle le dispositif d'actionnement (20) électrique est alimenté au moyen d'un courant (60) régulable, et **en ce qu'**une durée de la première phase (72) et/ou une intensité du courant (60) régulable est modifiée afin de déterminer le cas limite.

7. Procédé selon l'une des revendications 1 à 5, **caractérisé en ce qu'**une courbe dans le temps de l'excitation comprend une première phase (72), dans laquelle le dispositif d'actionnement (20) électrique est alimenté au moyen d'un premier courant (60) régulable, et **en ce que** la courbe dans le temps comprend une deuxième phase (74) suivante dans laquelle le dispositif d'actionnement (20) électrique est alimenté au moyen d'un deuxième courant (60) régulable, le deuxième courant (60) étant inférieur au premier courant (60), et **en ce qu'**une durée de la première phase (72) et/ou une intensité du deuxième courant (60) régulable est modifiée afin de déterminer le cas limite.

8. Procédé selon l'une des revendications 5 à 7, **caractérisé en ce qu'**une courbe dans le temps de l'excitation comprend une troisième phase qui suit la seconde phase (74), dans laquelle le dispositif d'actionnement (20) électrique est excité ou alimenté au moyen d'une modulation d'impulsions en largeur ou d'un troisième courant (60) régulable.

9. Procédé selon au moins l'une des revendications précédentes, **caractérisé en ce que** la valeur de décalage est prédéfinie en fonction d'une pression de carburant dans un accumulateur de pression (28) et/ou d'une température de carburant et/ou d'une résistance électrique des lignes électriques (35) raccordées au dispositif d'actionnement (20) électrique.

10. Dispositif de commande et/ou de régulation (36) pour un moteur à combustion interne, destiné à mettre en oeuvre le procédé selon au moins l'une des revendications 1 à 9.

11. Programme informatique comprenant un code de programme qui, lorsque le code de programme est exécuté dans un ordinateur, obtient à ce que l'ordinateur mette en oeuvre un procédé selon au moins l'une des revendications 1 à 9.
